# EUROPEAN PATENT APPLICATION

(11) **EP 1 878 780 A1**
(43) Date of publication of application: **16.01.2008**
(21) Application number: 06014331.0
(22) Date of filing: 11.07.2006
(51) Int. Cl.: C09K 15/08

(54) **Oxygen-scavenging compositions**

(71) Applicant: DSM IP Assets B.V., 6411 TE Heerlen (NL)
(72) Inventor: Gijsman, Pieter, 6191 NM Beek (NL); Jansen, Johan Franz Gradus Antonius, 6165 AP Geleen (NL)
(74) Representative: Scheltus, Irma

(57) **Abstract**

The present invention relates to a composition containing an oxidisable carbon-containing component, wherein the composition further contains a vicinal dioxygen containing component. In one embodiment of the invention, the vicinal dioxygen containing component contains at least one 1,2-dioxo-moiety. In another embodiment of the invention, the vicinal dioxygen containing component contains at least one 1,2-oxo-hydroxy moiety. The present invention further relates to the use of the composition for the preparation of an oxygen-scavenging object like for example a container for food, drink or feed packaging such as a film, a bottle, a vessel or a wrap.

## Description

The present invention relates to oxygen-scavenging compositions containing an oxidisable carbon-containing component. The present invention also relates to the use of such a composition for the preparation of an oxygen-scavenging object. The present invention further relates to objects containing an oxygen scavenging layer containing such a composition.

Oxygen-scavenging compositions are well known and are especially useful in the food packaging business. It is known that oxygen can have an effect on the odor and taste of packaged food thereby shortening the shelf life of the food. The oxidisable carbon-containing component present in the oxygen-scavenging compositions react with oxygen thereby reducing or eliminating the odor and/or undesirable taste of food or beverages excessively exposed to oxygen. The incorporation of oxidation catalyst in the oxygen-scavenging compositions accelerates the oxygen-uptake. Typical oxidation catalysts mentioned in the prior art are transition metal catalysts. The most common transition metal catalyst described by the prior art is a cobalt salt. A disadvantage of using transition metal catalysts for accelerating the oxygen uptake is that it will be unavoidable that part of the transition metal will be causing environmental pollution. Needless to say that this is not desirable.

There is, thus, need for alternative oxidation catalysts with less environmental effects.

Aim of the invention is a composition containing an oxidisable carbon-containing component wherein the presence of a transition metal catalyst is not necessary.

This aim is achieved in that the composition further contains a vicinal dioxygen containing component.

It has surprisingly been found that the vicinal dioxygen containing component is an alternative for a transition metal catalyst. In addition, it has been found that the use of some of said vicinal dioxygen containing components even results in that the oxygen scavenging properties of the composition are more efficient.

In one embodiment of the invention, the vicinal dioxygen containing component contains at least one 1,2-dioxo-moiety. Preferably, the vicinal dioxygen containing component contains at least one 1,2-dioxo-moiety according to formula I 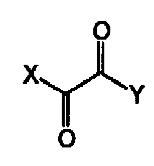 with X and Y being identical or different from each other, and representing respectively: X, Y: OR, SR, NR₁R₂, R, O⁻M⁺; in which
R, R_{1,} R₂: a group selected from the groups consisting of H, an optionally substituted C₁-C₂₀ alkyl group, an optionally substitiuted C₆-C₂₀ aryl group, an optionally substituted C₇-C₂₀ alkylaryl group, and an optionally substituted C₇-C₂₀ arylalkyl group;
M⁺ being a cation
and wherein X and Y may be joint together to form a vicinal dioxo cyclic structure of at least 5 carbon atoms,
and/or with any of X or Y representing an oligomeric or polymeric residue, which can optionally be substituted.

Preferably, X and/or Y being R. More preferably, X and Y being R. Even more preferably, X or Y being an optionally substitiuted C₆-C₂₀ aryl group or an optionally substituted C₇-C₂₀ arylalkyl group; or X is an optionally substituted C₁-C₂₀ alkyl group and Y is an optionally substituted C₆-C₂₀ aryl group. In another preferred embodiment, X is OH or an optionally substituted O-C₁-C₂₀ alkyl group and Y is an optionally substituted C₆-C₂₀ aryl group. In still another preferred embodiment of the invention, X and/or Y is an O-M⁺, with M⁺ representing an alkaline metal or earth alkaline metal cation, or an ammonium ion.

In another embodiment of the invention, the vicinal dioxygen containing component contains at least one 1,2-oxo-hydroxy-moiety. Preferably, the vicinal dioxygen containing component contains at least one 1,2-oxo-hydroxy-moiety according to formula II 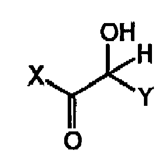 with X and Y being identical or different from each other, and representing respectively:
X: OR, SR, NR₁R₂, R, O⁻M⁺ ; Y: OR, SR, NR₁R₂, R;
R, R₁, R₂: a group selected from the groups consisting of H, an optionally substituted C₁-C₂₀ alkyl group, an optionally substitiuted C₆-C₂₀ aryl group, an optionally substituted C₇-C₂₀ alkylaryl group, and an optionally substituted C₇-C₂₀ arylalkyl group,
M⁺ being a cation
and wherein X and Y may be joint together to form a vicinal dioxo cyclic structure of at least 5 carbon atoms,
and/or with any of X or Y representing an oligomeric or a polymeric residue, which can optionally be substituted.

Preferably, X being R. More preferably, X and/or Y being an optionally substitiuted C₆-C₂₀ aryl group or an optionally substituted C₇-C₂₀ arylalkyl group; or X is an optionally substituted C₁-C₂₀ alkyl group and Y is an optionally substituted C₆-C₂₀ aryl group. In another preferred embodiment, X is OH or an optionally substituted O-C₁-C₂₀ alkyl group and Y is an optionally substituted C₆-C₂₀ aryl group. In still another preferred embodiment of the invention, X is an O⁻M⁺, with M⁺ representing an alkaline metal or earth alkaline metal cation, or an ammonium ion.

Examples of substituents are, for instance, groups such as halogens, amines groups, alcohols, ethers, polyalkyleneoxy residues, carboxylates, anhydrides, amides, ureas, urethanes, etc. Examples of polymeric residues are, for instance, polyethylene, polypropylene, polystyrene, polyethylene oxides, polypropylene oxides, polycarbonates, polyurethanes, polyesters, etc.

Preferably, from a processability point of view, the composition of the present invention contains a vicinal dioxygen containing component with a molecular weight of at least 200, preferably at least 500.

Examples of vicinal dioxygen containing components containing at least one 1,2 dioxo-moiety according to formula I that can suitably employed in the compositions according to the invention are, not limitative: 2,3-butanedione, 2,3-pentanedione, 2,3-hexanedione, 3,4-hexanedione, 2,3-heptanedione, 1-phenyl propanedione, pyruvic aldehyde, pyruvic acid,methylpyruvate, ethylpyruvate camphorquinone.

Examples of vicinal dioxygen containing components containing at least one 1,2 oxo-hydroxy moiety according to formula II that can suitably employed in the compositions according to the invention are, not limitative: acetol, hydroxyacetone, dihydroxyacetone, benzoin, aryl substituted benzoins, furoin, 2-hydroxypropanal, gluconic acid , methyl gluconate, glucoronic acid, glyceric acid 3-hydroxybutanone.

Preferably, the amount of vicinal dioxygen containing component in the composition is at least 0.0001 wt. %, preferably at least 0.01 wt. % and even more preferably at least 0.1 wt.%, calculated on the total weight of the composition. Preferably, the amount of vicinal dioxygen containing component in the composition is lower than 10 wt. %. However, the amount of vicinal dioxygen containing component in the composition may vary within rather wide ranges, and may be chosen depending on the kind of application in which the composition of the invention is applied. The skilled man easily can assess, in dependence of the type of application selected, which amount thereof leads to good results.

The inventors have further found that the efficiency of oxygen-uptake is enhanced when the composition further contains an alkaline metal or earth alkaline metal salt or an ammonium salt. Preferably, the alkaline metal or earth alkaline metal salt is a K, Li or Na salt, preferably a K, Li or Na carboxylate. Generally, the carboxylates that can suitably be used in this preferred embodiment of the invention will be carboxylates having from 2 to 50 carbon atoms. Suitable carboxylates that can be used in this preferred embodiment of the present invention are, for instance, propionate, acetate, ethylhexanoate, lactate, butyrate. Also, for instance, stearates, palmitates, linoleates, linolenates, and oleates can suitably be used. Preferably the carboxylates used are carboxylates having at least 6 carbon atoms.

Preferably, the amount of the alkaline metal or earth alkaline metal salt or ammonium salt, if present, in the composition is at least 0.0001 wt. %, preferably at least 0.01 wt. % and even more preferably at least 0.1 wt.%, calculated on the total weight of the composition. Preferably, the amount of alkaline metal or earth alkaline metal salt or ammonium salt in the composition is lower than 10 wt. %.

In one embodiment of the invention, the oxidisable carbon containing component is a polymer. Suitable oxidisable polymers are organic polymers containing allylic positions; organic polymers containing tertiary carbons; organic polymers containing benzylic positions and organic polymers containing ether segments.

Examples of organic polymers containing allylic positions are butadiene containing (co)polymers; isoprene containing (co)polymers; cyclohexene copolymer, like for example ethylene-cyclohexene copolymers or polymers containing pendent 3-cyclohexenyl groups like ethylene-cyclohexenylmethyl acrylate copolymers and ethylene-methylacrylate-cyclohexeneylmethyl acrylate terpolymers

Examples of organic polymers containing tertiary carbons are propylene containing (co)polymers, like for example propylene homopolymer or ethylene-propylene copolymer. Examples of organic polymers containing benzylic positions are m-xylylamine containing polyamides, like for example MXD6-polyamide. Preferred oxidisable polymers are organic polymers containing ether segments, for example polymers containing ethylene glycol, propylene glycol or tetramethylene glycol based segments. Preferred organic polymers containing ether segments are copolymers comprising propylene glycol segments, preferably 1,2-propylene glycol segments, and polymer segments. More preferably said copolymer comprising propylene glycol segments and polymer segments has been prepared by copolymerising the corresponding monomers in the presence of functionalised propylene glycol segments. To allow the monomers to attach on the propylene glycol segments these segments are functionalized with end groups that can react with reactive sites of the monomer. Examples of such functional end groups and reactive monomer sites are e.g. -OH, -NH2, acid, epoxy and other functional groups known in the art as reactive with polyamide monomers. Suitable propylene glycol segments are linear oligomers of propylene glycol and are of the substituted type. In IUPAC nomenclature this propylene glycol is denoted as polyoxy-1,2-propanediyl. They consist of 2 to 5000 propylene glycol monomer units, preferably of 10 to 2500 units and in this shape and size they have been copolymerised with the monomers. In this range an even distribution of the copolymers in the polycondensate appears to be achieved. During this copolymerisation copolymers of the -ABABA- type are formed comprising polymer segments A of variable length alternated with propylene glycol segments B.

In another embodiment the propylene glycol segments are present as branches in a two, three, four or higher star branched compound the centre unit of which can be e.g. a di-, tri-, tetra or higher functional ester, amide, ether, urethane. In the process of preparation of the copolymer applied in the composition of the invention, the polymer segments then grow from the free ends of the propylene glycol segment branches. During this copolymerisation linear copolymers can be formed of the type ABA or branched copolymers having branches of the type BA.

The polymer segments in the copolymers are preferably polyamide or polyester segments, more preferably polyamide segments. Examples of suitable polyesters are polyethylene terephtalate (PET), polybutylene terephtalate (PBT), polyethylene naphtanoate (PEN), polybutylene naphtanoate (PBN). Examples of suitable polyamides (PA) are aliphatic polyamides, that may eventually be branched polyamides, such as PA6, PA4,6, PA6,6, PA 11, PA12, semi aromatic polyamides as MXD6, PA6,1/6,T, PA6,6/6,T, fully aromatic polyamides and copolymers and blends of the listed polyamides and polyesters.

Suitable PPO segments are linear oligomers of PPO and are of the substituted type. In IUPAC nomenclature this PPO is denoted as polyoxy-1,2-propanediyl. They consist of 2 to 5000 polypropylene oxide monomer units, preferably of 10 to 2500 units and in this shape and size they have been copolymerised with the monomers. In this range an even distribution of the copolymers in the polycondensate appears to be achieved. During this copolymerisation copolymers of the -ABABA- type are formed comprising polymer segments A of variable length alternated with propylene oxide segments B.

In another embodiment the substituted PPO segments are present as branches in a two, three, four or higher star branched compound the centre unit of which can be e.g. a di-, tri-, tetra or higher functional ester, amide, ether, urethane. In the process of preparation of the copolymer applied in the composition of the invention, the polymer segments then grow from the free ends of the PPO segment branches. During this copolymerisation linear copolymers can be formed of the type ABA or branched copolymers having branches of the type BA.

Apart from the PPO segments also other ether segments optionally may be present as e.g. polyethylene oxide, however in smaller amounts than the PPO. Preferably the other ether segments are present in amounts less than 40 wt%, more preferably less than 30 wt% or less than 10 wt% of the amount of PPO. Also the PPO segments themselves may comprise a minority, i.e. present in amounts less than 40 wt%, more preferably less than 30 wt% or less than 10 wt% of the amount of PPO, of other poly(alkylene)oxide units, usually as co-blocks. An example of this is a block poly(ethylene)oxide-substituted PPO block-block poly(ethylene)oxide triblock segment.

In another embodiment of the invention, the oxidisable carbon containing component is an organic component containing allylic positions, like for example squalene, unsaturated fatty acids, castor oil, d-limonene or dihydroanthracene.

The composition according to the invention preferably further contains a polycondensate. The polycondensate is preferably (co)polyamide or (co)polyester or mixtures thereof, more preferably the polycondensate is polyamide.

Further the composition according to the invention may comprise other usual additives that may give a certain additional required property to the composition, examples of which are fibres, fillers, nano-particles, antioxidants, flame retardants, mould release agents and other compounds known in the art for this purpose.

In specifically preferred embodiments of the invention, the composition of the invention is essentially free of cobalt, most preferably free of cobalt. Essentially free of cobalt means that the cobalt concentration is lower than 10 ppm, preferably lower than 5 ppm and even more preferably lower than 1 ppm, calculated on the total weight of the composition. Even more preferably, the composition of the invention is essentially free of transition metal, most preferably free of transition metal. Essentially free of transition metals means that the transition metal concentration is lower than 10 ppm, preferably lower than 5 ppm and even more preferably lower than 1 ppm, calculated on the total weight of the composition

The present invention further also relates to the use of the composition of the invention for the preparation of an oxygen-scavenging object, like for example a container for food, drink or feed packaging such as a film, a bottle, a vessel or a wrap. In a preferred embodiment, the present invention relates to the use of the composition of the invention for the preparation of an object having at least one surface that is to be exposed to an oxygen containing environment, wherein the object comprises a layer containing the composition according to the invention, More in particular, the present invention relates to a multilayer object containing a layer of the composition of the invention. In one embodiment, the object is a multilayer object containing a layer of the composition of the invention wherein said layer being separated from a first surface of the object by one or more first layers having an overall oxygen permeability of at most 500 cm³/m².24h.atm (when measured according to ASTM standard D3985 under dry conditions on a film having a thickness of 60 µm). In another embodiment, the composition is present in at least a layer forming a second surface of the object, opposite to the first surface, or being separated from said second surface by one or more second layers, the second layers having an overall oxygen permeability of more than 500 cm³/m².24h.atm (when measured according to ASTM standard D3985 under dry conditions on a film having a thickness of 60 µm). In still another embodiment of the invention, the layer containing the composition is separated from a second surface of the object, opposite to the first surface, by one or more second layers, the second layers having an overall oxygen permeability of at most 500 cm³/m².24h atm (when measured according to ASTM standard D3985 under dry conditions on a film having a thickness of 60 µm).

The composition containing the oxidisable carbon-containing component and the vicinal dioxygen containing component can be prepared by mixing the oxidisable carbon-containing component with the vicinal dioxygen containing component in a separate step or in a step in the process of manufacturing the oxygen scavenging object. This mixing can be conducted in the equipment known in the art such as extruders and mixers. The process applies melt-mixing, i.e. the mixing takes place above the melting point of the oxidisable carbon-containing component but below its decomposition temperature.

The invention is now demonstrated by means of a series of examples and comparative examples. All examples are supportive of the scope of claims. The invention, however, is not restricted to the specific embodiments as shown in the examples.

### Experimental part

### Preparation of oxygen scavenging copolyetherester

A 2 l reactor equipped with distillation column and stirrer was charged with 410 g dimethylterephthalate, 290 g 1,4-butane diol, 550 g of a propyleneoxide based oligomer, 250 mg of titanium tetrabutoxide and 150 mg of magnesium acetate tetrahydrate.

After 3 times having flushed the reactor with nitrogen, the reactor content was heated under stirring and atmospheric pressure gradually within one hour to a temperature of 150°C, kept at this temperature for half an hour, and subsequently further heated within 2 hours to a temperature of 220°C. The thus obtained transesterified product was then further polymerised at 240°C under vacuum (down to 2 mbar) for 180 minutes at a stirring speed of 20 RPM. The polymerised product was released from the reactor, under nitrogen pressure, in the form of a strand, cooled in water, and granulated in a pelletizer.

### Preparation of compounds

The copolyetherester granules were grinded. To these powder different vicinal dioxygen containing components were added as oxidation catalyst by solvent blending (adding the additives as a solution followed by evaporation of the solvent).

The effectivity of a catalyst was also determined in polypropyleneglycol (Mn 2700) (PPG) instead of the copolyetherester. In this case, the catalyst was mixed directly to the polypropylene glycol.

### Examples I-VIII and Comparative Experiments A-B: Determination of the effectivity of the catalysts

The effectivity of the catalysts on the oxygen uptake rate of the copolymer was determined. In a vessel of 65 ml, to which a pressure transducer was connected, 1 gram polymer powder was brought into contact with an atmosphere containing 100% oxygen. The drop of the pressure in the vessel at 25 or 30 °C (depending on the polymer used) was recorded. From the drop in pressure, the oxygen uptake was calculated.

As a measure of the activity of the catalysts, the time to an oxygen uptake of 50 mmol/kg was determined. The results are shown in Table 1 and Table 2.

**Table 1: Effectivity of catalysts in the copolyether ester at 25°C**

| Example | Catalyst. | Amount catalyst (wt%) | Cocatalyst | Amount cocatalyst (mmol/kg) | Time to an oxygen uptake of 50 mmol/kg (minutes) |
|---|---|---|---|---|---|
| I | Phenylpropanedione | 0.5 | - | | 230 |
| II | Phenylpropanedione | 1 | | | 130 |
| III | Phenylpropanedione | 0.1 | Potassium octanoate | 1.5 | 420 |
| IV | Phenylpropanedione | 0.25 | Potassium octanoate | 1.5 | 130 |
| V | Phenylpropanedione | 0.5 | Potassium octanoate | 0.5 | 100 |
| VI | Phenylpropanedione | 0.5 | Potassium octanoate | 1.5 | 45 |
| VII | Butanedion | 1 | - | | 1300 |
| VIII | Camperdion | 1 | Potassium octanoate | 1.5 | 14000 |
| VIII | Benzoine | 1 | | | 7150 |
| VIII | Benzoine | 1 | Potassium octanoate | 1.5 | 6900 |
| | | | | | |
| A | - | - | - | - | >20.000 |
| B | Cobalt-acetate | 0.1 | | | 1000 |

**Table 2: Effectivity of catalysts in PPG at 30°C**

| Example | Catalyst. | Amount catalyst (wt%) | Cocatalyst | Amount cocatalyst (mmol/kg) | Time to an oxygen uptake of 50 mmol/kg ( minutes) |
|---|---|---|---|---|---|
| I | Butanedion | 1.0 | - | | 5000 |
| C | Cobalt-acetate | 0.1 | | | >7000 |

The examples and comparative experiments clearly demonstrate the oxygen scavenging capacity of compositions according to the invention. Furthermore they clearly demonstrate the enhanced efficiency which can be obtained by adding a cocatalyst according to the invention. Furthermore they demonstrate that multiple polymers can be used according to the invention. In addition, it is shown that the use of certain vicinal dioxygen containing components even results in that the oxygen scavenging properties of the composition are more efficient, i.e. the rate of oxygen-uptake is higher, compared to the use of a cobalt compound as oxidation catalyst.

## Claims

1. Composition containing an oxidisable carbon-containing component, **characterized in that** the composition further contains a vicinal dioxygen containing component.

2. Composition according to claim 1, **characterized in that** the vicinal dioxygen containing component contains at least one 1,2-dioxo-moiety according to formula 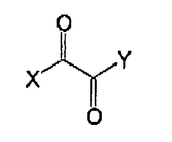 with X and Y being identical or different from each other, and representing respectively:
X, Y: OR, SR, NR₁R_{2,} R, O⁻M⁺;
R, R_{1,} R₂: a group selected from the groups consisting of H, an optionally substituted C₁-C₂₀ alkyl group, an optionally substitiuted C₈-C₂₀ aryl group, an optionally substituted C₇-C₂₀ alkylaryl group, and an optionally substituted C₇-C₂₀ arylalkyl group,
M⁺ being a cation
and wherein X and Y may be joint together to form a vicinal dioxo cyclic structure of at least 5 carbon atoms,
and/or with any of X or Y representing an oligomeric or polymeric residue.

3. Composition according to claim 2, **characterised in that** X and/or Y being R.

4. Composition according to claim 2, **characterised in that** X and Y being R.

5. Composition according to claim 2, **characterised in that** X or Y being an optionally substituted C₆-C₂₀ aryl group or an optionally substituted C₇-C₂₀ arylalkyl group.

6. Composition according to claim 2, **characterised in that** X is an optionally substituted C₁-C₂₀ alkyl group and Y is an optionally substituted C₆-C₂₀ aryl group.

7. Composition according to claim 2, **characterised in that** X is OH or an optionally substituted O-C₁-C₂₀ alkyl group and Y is an optionally substituted C₆-C₂₀ aryl group.

8. Composition according to claim 2, **characterised in that** X and/or Y is an O⁻M⁺, with M⁺ representing an alkaline metal or earth alkaline metal cation, or an ammonium ion.

9. Composition according to claim 1, **characterized in that** the vicinal dioxygen containing component contains at least one 1,2-oxo-hydroxy moiety according to formula II 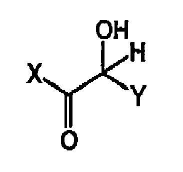 with X and Y being identical or different from each other, and representing respectively:
X: OR, SR, NR₁R₂, R, O⁻M⁺ ; Y: OR, SR, NR₁R₂, R;
R, R_{1,} R₂ : a group selected from the groups consisting of H, an optionally substituted C₁-C₂₀ alkyl group, an optionally substitiuted C₆-C₂₀ aryl group, an optionally substituted C₇-C₂₀ alkylaryl group, and an optionally substituted C₇-C₂₀ arylalkyl group,
M⁺ being a cation
and wherein X and Y may be joint together to form a vicinal dioxo cyclic structure of at least 5 carbon atoms,
and/or with any of X or Y representing an oligomeric or a polymeric residue.

10. Composition according to claim 9, **characterised in that** X being R.

11. Composition according to claim 9, **characterised in that** X and/or Y being an optionally substitiuted C₆-C₂₀ aryl group or an optionally substituted C₇-C₂₀ arylalkyl group.

12. Composition according to claim 9, **characterised in that** X is an optionally substituted C₁-C₂₀ alkyl group and Y is an optionally substituted C₆-C₂₀ aryl group.

13. Composition according to claim 9, **characterised in that** X is OH or an optionally substituted OC₁-C₂₀ alkyl group and Y an optionally substituted C₆-C₂₀ aryl group

14. Composition according to claim 9, **characterised in that** X is an O⁻ M⁺, with M⁺ representing an alkaline metal or earth alkaline metal cation, or an ammonium ion.

15. Composition according to any one of claims 1-14, **characterised in that** the composition further contains a K, Li or Na salt.

16. Composition according to any one of claims 1-15, **characterised in that** the oxidisable carbon containing component is an organic polymer containing allylic positions, preferably a butadiene containing (co)polymer, an isoprene containing (co)polymer, a cyclohexene copolymer or a polymer containg pendant cyclohexenyl groups.

17. Composition according to any one of claims 1-15, **characterised in that** the oxidisable carbon containing component is an organic polymer containing tertiary carbons, preferably a propylene containing (co) polymer.

18. Composition according to any one of claims 1-15, **characterised in that** the oxidisable carbon containing component is an organic polymer containing benzylic positions, preferably a m-xylylamine containing polyamide.

19. Composition according to any one of claims 1-15, **characterised in that** the oxidisable carbon containing component is an organic polymer containing ether segments.

20. Composition according to claim 19, **characterised in that** the ether segments are ethylene glycol, propylene glycol or tetramethylene based segments.

21. Composition according to claim 20, **characterised in that** the organic polymer containing ether segments is a copolymer comprising 1,2-propylene glycol based segments and polymer segments.

22. Composition according to claim 21, **characterised in that** the copolymer comprising 1,2-propylene glycol based segments and polymer segments has been prepared by copolymerising the corresponding monomers in the presence of functionalised 1,2-propylene glycol segments.

23. Composition according to claim 21 or 22, **characterised in that** the polymer segments are polyamide or polyester.

24. Composition according to any one of claims 1-15, **characterised in that** the oxidisable carbon containing component is an organic component containing allylic positions.

25. Composition according to claim 24, **characterised in that** the organic component containing allylic positions is squalene, an unsaturated fatty acid, castor oil, d-limonene or dihydroanthracene.

26. Composition according to any one of claims 1-25, **characterised in that** the composition further contains a polycondensate.

27. Composition according to claim 26, **characterised in that** the polycondensate is (co)polyamide or (co)polyester or mixtures thereof.

28. Composition according to any one of claims 1-27, **characterised in that** the composition is essentially free of cobalt.

29. Use of the composition according to any one of claims 1-28 for the preparation of an oxygen-scavenging object.

30. Use according to claim 29, wherein the object is a container for food, drink or feed packaging such as a film, a bottle, a vessel or a wrap.

31. Use according to claim 29, wherein the object is a multilayer object containing a layer of the composition and wherein said layer being separated from a first surface of the object by one or more first layers having an overall oxygen permeability of at most 500 cm³/m².24h.atm.

32. Use according to claim 29, wherein the composition is present in at least a layer forming a second surface of the object, opposite to the first surface, or being separated from said second surface by one or more second layers, the second layers having an an overall oxygen permeability of more than 500 cm³/m².24h.atm.

33. Use according to claim 29, wherein the layer containing the composition is separated from a second surface of the object, opposite to the first surface, by one or more second layers, the second layers having an an overall oxygen permeability of at most 500 cm³/m².24h.atm.

34. Object, having at least one surface that is to be exposed to an oxygen containing environment, **characterised in that** the object comprises a layer containing the composition according to anyone of claims 1-28.

35. Object according to claim 34, wherein the object is a container for food, drink or feed packaging such as a film, a bottle, a vessel or a wrap.
